# EUROPEAN PATENT SPECIFICATION

(11) **EP 3 275 397 B1**
(45) Date of publication and mention of the grant of the patent: **06.01.2021**
(21) Application number: 17183799.0
(22) Date of filing: 28.07.2017
(51) Int. Cl.: A61C 13/00, A61C 13/01

(54) **REAL TIME PROSTHETIC BASE ADAPTATION**
PROTHESENBASISANPASSUNG IN ECHTZEIT
ADAPTATION DE BASE PROTHÉTIQUE EN TEMPS RÉEL

(30) Priority: 28.07.2016 US 201662368046 P
(43) Date of publication of application: 31.01.2018
(73) Proprietor: Global Dental Science LLC, Scottsdale, AZ 85260 (US)
(72) Inventor: Keating, Scott C., Louisville, CO 80027 (US)
(74) Representative: V.O.

(56) References cited:
- CN-A- 104 688 367
- US-A1- 2014 255 873
- US-A1- 2014 272 796
- US-A1- 2015 182 314

## Description

### BACKGROUND OF THE INVENTION

The invention comprises an improved method for building a prosthetic device. The invention further comprises a technique for building teeth and a denture base in a digital space such as a denture design software. The invention even further comprises a method for adapting some or a complete digital denture base contemporaneously as changes are made to digital teeth on the same digital model.

### 1. Field of the Invention

The present invention relates to the field of manufacturing digital dentures. The present invention further relates to designing digital dentures for patients. The present invention even further relates to a system of modifying digital denture teeth while adapting the base of the denture through computer software.

### 2. Description of Related Art

The idea of designing teeth in virtual space is fairly common in prior art, see in this respect for example US 2015/0182314 A1. For prosthetic solutions such as dentures and crown/bridge work, such solutions are well known in the prior art and are well commercialized. Teeth are designed and customized for each patient by using data derived from imaging the patient's anatomy, occlusion, existing prosthetics, etc. However, prosthetic bases must also be designed and modified to properly fit and support the new teeth of the patient.

Such prior art solutions take the approach of designing the teeth first to achieve proper occlusion and functionality along with optimal aesthetics. The base of the prosthetic is built after the teeth are set so that the designer of the prosthetic must manually sculpt the prosthetic base after making changes to the teeth. Most software programs used to facilitate prosthetic designs, in fact, depict the surface of teeth apart from the base, or floating in space, throughout in the design operation. Any revisions to the tooth position or other changes to the teeth - for example, due to additional information gleaned through try-ins or subsequent imaging, will require additional manual configurations of the denture base or complementary prosthetic component. In some prior art solutions, one must completely rebuild the denture base each time the tooth position is changed. Though some prior art solutions may allow auto-fill of the teeth at the intaglio surfaces or touch up work, largely the work of rebuilding bases is sculpted manually (ie, using a mouse or other input interface to change the boundary lines). This process is sometimes inconsistent and always inefficient. Base surfaces often appear as meshes or surfaces in common designing software. If the user simply moves the mesh or changes the dimensions of the base to meet the modifications of the tooth, the base structures stretch or retract without maintaining the characteristics of pockets, root eminences, gingiva, rugae minimum thickness and other anatomical landmarks that demark and mimic the functional and aesthetic characteristics of the natural anatomy of the patient.

There remains a solution for a method and system for improving the process of digitally correcting the base of a dental prosthetic to the changes made to artificial teeth designed in a computer software program. There further remains a solution for base adaptation tool disposed within prosthetic tooth design software that enables real-time adjustments upon the prosthetic base that correlate to the modifications to teeth being designed for functionality and aesthetic purposes. There even further remains a solution that eliminates the need to redo a prosthetic base for the same patient upon subsequent re-workings of the same prosthesis.

### SUMMARY OF THE INVENTION

These and other objects were met with the method according to claim 1. Embodiments of the method are described in the dependent claims. Disclosed is a method for designing a prosthetic structure that includes a tooth portion and a base portion, as defined in claim 1.

### BRIEF DESCRIPTION OF THE DRAWINGS

A more complete understanding of the present invention may be derived by referring to the detailed description and claims when considered in connection with the Figures, where like reference numbers refer to similar elements throughout the Figures:
Figures 1a depict an inferior palatal view of a prosthetic denture with markers affixed upon gingival portions of a base complements the modification of an artificial tooth structure.
Figure 1b depict the same view as in Fig 1a but showing the gingival portions of the base being adapted to the changes indicated by the arrows moved by the affixed upon gingival portions of a base complements the modification of an artificial tooth structure.
Figures 1c and 1d depict the same view as in Fig 1a, but showing the base portion being adapted to changes in tooth position.
Figure 2a depicts a side view of an upper denture showing an initial position of the lingual side of the upper denture.
Figure 2b depicts the same view of an upper denture as in Fig 3a, but showing the base portion of upper denture being adapted as the tooth angulation and shape is modified.
Figure 3a a side view of an upper denture showing an initial position of the lingual side of the upper denture.
Figure 3b depicts the same view of an upper denture as in Fig 3a, but showing the base portion of upper denture being adapted for changes to the occlusal plane of the upper denture.

### DETAILED DESCRIPTION OF THE INVENTION

The present invention solves a number of issues with designing prosthetic teeth in the prior art. The present invention provides a digital adaptation of the base portion of a dental prosthetic structure during the process modifying the teeth portion. The present invention reduces the need to manually sculpt the base portions of the digital prosthetic after modifying the tooth or teeth portions. The present invention further solves the problem of having to manually re-sculpt the same digital base portion of a prosthetic upon subsequent modifications to the same dental prosthetic.

According to the Figures provided, a method and system of adapting the base portion to movements and modifications of the teeth are disclosed.

In an embodiment of the inventive process, a user who designs a dental prosthetic structure engages a digital software platform that utilizes patient information and data acquired through imaging, impressions and scans thereof, and other means known in the arts. In one embodiment of the invention, the user may engage in standalone computation that is unique to the patient information. In another embodiment, the user may select a template from a database of selected anatomical profiles, or of preferred dental prostheses that provide a setup and analogue to sculpt the customized prosthesis for the patient.

The user may begin sculpting or positioning the teeth, according to techniques and tools utilized in the software displayed in a computer interface. In a preferred embodiment of the invention, a base portion of the prosthetic structure is displayed in a direct or exploded view under the tooth portion of the prosthetic structure, for example on a display screen or other 3D interface to the user such as a hologram. As the user modifies the teeth in the designing operation of the software, the base portion of the prosthetic structure adapts to support the change. The user may implement a variety of changes, from subtle sculpting to major changes including remove a tooth or teeth, changing out molds, or other functional and aesthetic changes.

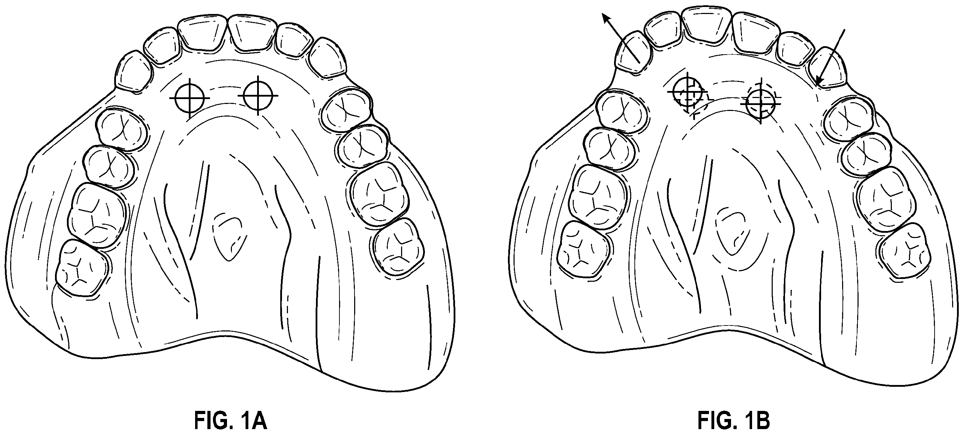

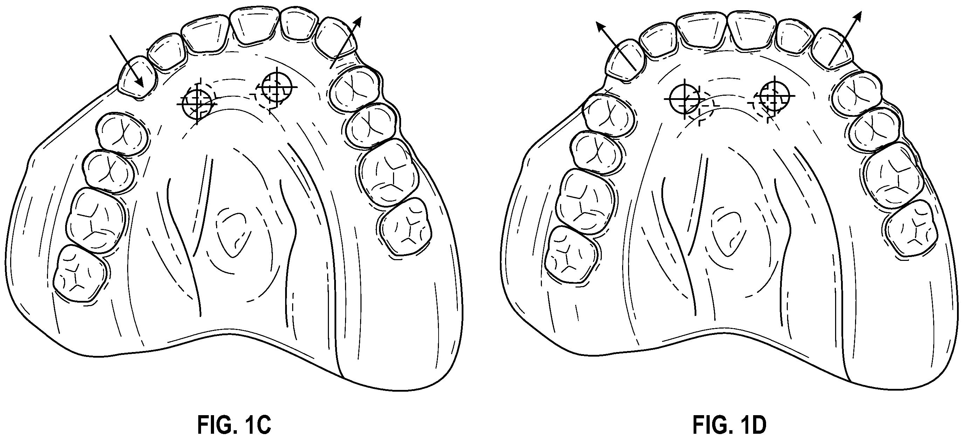

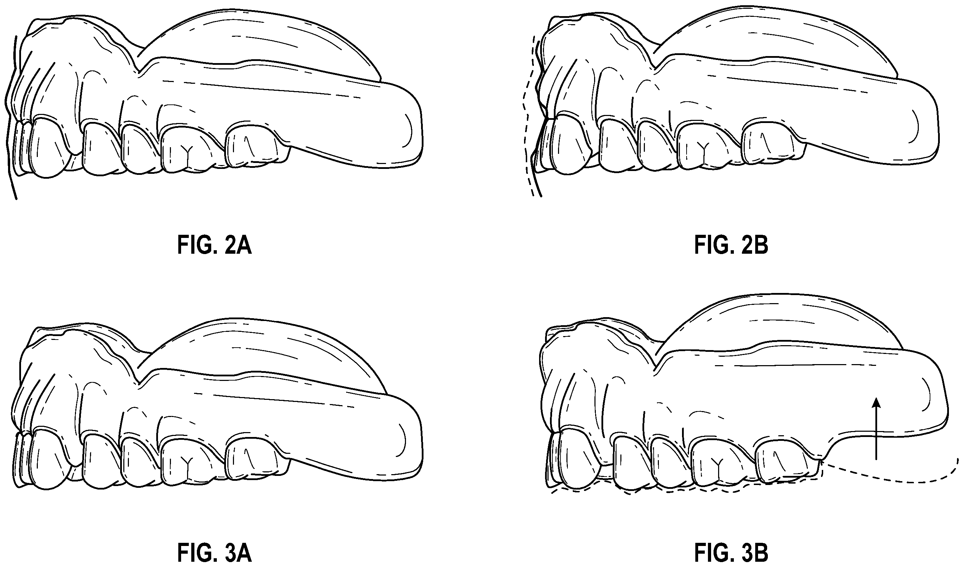

According to the embodiments illustrated in Figs 1-3, the base reacts contemporaneously to match the changes of the tooth portion as design changes are made on the screen. Shown are changes to tooth position in the inferior palatal views in Fig 1a-d, to adjustments in tooth angulation and position in Figures 2a-2b, and to modifications to the occlusal plane of Figures 3a-3b that bring (for example) the upper arch denture into better occlusion with the lower denture (not shown) of the patient. The resulting changes to the base may be more pronounced along the arch proximal to the tooth portions, and less so to the more lingual aspects of the base portion of the upper denture. Specifically, Figure 1a shows a first set of fiducial markers in an initial position. Figures lb-d depict a second set of fiducial markers after the base adapts to the changes in tooth portion position, indicated by the solid line circles, with the first set of fiducial markers now shown in dotted line form. The adjustment in position of the second set of fiducial marks notates an exemplary base adaptation that is not linear or precise to the change in the tooth position. In other words, the change in the base portion may be driven by factors such as aesthetics, functionality, and other variables rather than simply the distance of tooth portion repositioning. Figures 2a and 2b show changes to the buccal side of the tooth portion and its complementary base portion adaptation, illustrating how tooth portion angulation and positioning may incur a base adaptation that is not necessarily a mirror change, but also accounts for changes in the roots of the tooth portion and other factors. Figures 3a and 3b illustrate how malocclusion adjustments may be adjusted in the base portion through pre-set parameters to the base portion, and that such adjustments may be more heavily applied to the arch portions proximal to the tooth than evenly distributed throughout the base portion.

In an embodiment of the invention, the described method comprises functional changes to the tooth portion that may include widening or narrowing an arch, moving an occlusal plane up or down, opening bite, closing the bite, correcting a cross-bite, changing tooth angles such as lingualization angle or cusp angles, lingualization of the posterior teeth, gross set-up changes (up-down-vertical), scaling the teeth, morphing the teeth (improving the cusps and/or fossae), stretching of the teeth.

In each of these functional and aesthetic changes of the teeth, the inventive process enables the adaptation of the base while changing the dimensions, position and shape of the teeth.

Once the modifications have been made to the tooth portion positions or to customize the patient teeth and the complementary base, additional aesthetic and/or functional changes to the teeth may be necessary, such as lowering the incisal edge, moving the incisal edge up, randomization to achieve a more natural appearance of the prosthetic structure, creating diastemata, and other aesthetic or functional changes.

The base portion may be attached to the teeth in the same relationship on the screen/interface and during the modification as it created and further manufactured (such as milled, 3D printed, or other manufacturing techniques known in the arts) out into the physical embodiment of the prosthetic, such as a denture. It may also be exploded out to a predetermined distance for the purposes of appreciating the relationship of the base portion to the tooth portion.

The base portion may be enabled with a number of preset variables to ensure that the strength, functionality and other desirable characteristics are not compromised by changes to the tooth portion. In one example, portions that fit against the patient's anatomy may be controlled so that they do not change. For instance, the inventive method limits changes to the palate, especially on the intaglio surface. Changes to the border molding of a denture may also be limited on the intaglio surface. Adaptations of the vestibule anatomy and/or buccal reflection are controlled so that those structures are not changed. In another embodiment, other aesthetic inputs to the base portion may be controlled, so that natural ruggae of the patient is utilized rather than being stretched according to a standard base adaptation formulation.

In an embodiment of the invention, a controlled (e.g., minimum) thickness of the base portion is maintained regardless of the thickness of the artificial teeth structures.

In another embodiment of the invention, the base adaptation does not include changes on the borders and intaglio surface, but modifies or adapts the cameo surface and the volumetric effect.

In yet another embodiment where a denture is desired by a dental professional to include a bar or other strengthening material for the purpose of strengthening. The inventive method may include a bar or other strengthening material design template or tool for adapting the base to the teeth that automatically implements spacing for the bar. It may be desirable to achieve and maintain a cantilever effect with the bar design within the base adaptation.

These and other variables known in the arts of prosthetic structure design may be input into the base portion adaption tool so that as the base portion morphs to complement modifications to the tooth portion, the base portion does not exceed certain preset parameters that are selected and desirable for functional and aesthetic characteristics of the patient's prosthesis.

Other variations and specialized circumstances may be implemented with this inventive base adaptation.

## Claims

1. A method for designing a prosthetic structure that includes a tooth portion and a base portion, the method comprising:
acquiring a set of data relating to the natural anatomy of a patient,
building the prosthetic tooth portion in a computer software program using the set of data, whereby the user sculpts and positions teeth with techniques and tools utilized in the software displayed in a computer interface;
displaying the base portion of the prosthetic structure in a direct or exploded view under the tooth portion of the prosthetic structure, wherein parameters for the dimensions of the base portion are pre-loaded,, wherein the base portion has a base structure including pockets, root eminences, gingiva, ruggae, minimum thickness and other anatomical landmarks that demark and mimic the functional and aesthetic characteristics of the natural anatomy of the patient;
modifying the tooth portion in a designing operation in the software; **characterized by**
simultaneously adapting the base portion of the prosthetic structure to the modifying of the tooth portion, so that the anatomical landmarks and shapes are mimicked within the parameters for the dimensions of the base portion in that the parameters for the dimensions of the base portion are defined such that portions of at least one of the following surfaces of the base portions are controlled so that they do not change: the intaglio surface, the borders of the base portion, buccal reflections, vestibule, so that the base portion retains a complementary relationship to the natural anatomy of the patient.

2. The method of Claim 1, the set of data relevant to the natural anatomy of the patient being derived from imaging of a patient's oral anatomy.

3. The method of Claim 1, the set of data relevant to the natural anatomy of the patient being derived from the scanning of an impression of the patient's oral anatomy.

4. The method of Claim 1, the set of data relevant to the natural anatomy of the patient being selected from a closest match of a database of selected anatomical profiles.

5. The method according to any one of claim 1-4, whereby the base portion maintains a minimum thickness regardless of volumetric reductions of the tooth portion accomplished during said adapting the base portion.

6. The method according to any one of claims 1-5, whereby the base portion is integrated with the tooth portion during said adapting the base portion.

7. The method according to any one of claims 1-7, the prosthetic structure comprising a full arch denture.

8. The method according to any one of claims 1-7, whereby the prosthetic device customized for the patient is a denture that has been scanned.

9. The method according to any one of claims 1-7, whereby the prosthetic device customized for the patient is digital denture previously designed for the patient.

10. The method according to any one of claims 1-9, whereby said adapting the base portion of the prosthetic structure to the modifications to the tooth portion contemporaneously adapts the cameo surface and the volumetric effect of the base portion.

11. The method according to any one of claims 1-10, whereby the step of adapting the base portion of the prosthetic structure to the modifications to the tooth portion contemporaneously includes reserving space for a strengthening material that may span at least a part of the base portion.

## Patentansprüche

1. Verfahren zum Entwerfen einer prothetischen Struktur, die einen Zahnabschnitt und einen Basisabschnitt umfasst, wobei das Verfahren einschließt:
Erfassen eines Datensatzes in Bezug auf die natürliche Anatomie eines Patienten,
Aufbau des prothetischen Zahnabschnitts in einem Computersoftwareprogramm unter Verwendung des Datensatzes, wobei der Benutzer Zähne mit Techniken und Werkzeugen formt und positioniert, die in der in einer Computerschnittstelle angezeigten Software verwendet werden;
Anzeigen des Basisabschnitts der prothetischen Struktur in einer direkten oder Explosionsansicht unter dem Zahnabschnitt der prothetischen Struktur, wobei Parameter für die Abmessungen des Basisabschnitts vorgeladen sind, wobei der Basisabschnitt eine Basisstruktur mit Taschen und Wurzelspitzen, Gingiva, Ruggae, Mindestdicke und andere anatomische Merkmale aufweist, die die funktionellen und ästhetischen Eigenschaften der natürlichen Anatomie des Patienten markieren und nachahmen;
Modifizieren des Zahnabschnitts in einer Entwurfsoperation in der Software; **gekennzeichnet durch**
gleichzeitiges Anpassen des Basisabschnitts der prothetischen Struktur an das Modifizieren des Zahnabschnitts, so dass die anatomischen Merkmale und Formen innerhalb der Parameter für die Abmessungen des Basisabschnitts nachgeahmt werden, indem die Parameter für die Abmessungen des Basisabschnitts so definiert werden, dass Abschnitte von wenigstens einer der folgenden Oberflächen der Basisabschnitte so gesteuert werden, dass sie sich nicht ändern:
die Tiefdruckoberfläche, die Ränder des Basisabschnitts, bukkale Reflexionen, Vorhof, so dass der Basisabschnitt eine komplementäre Beziehung zur natürlichen Anatomie des Patienten beibehält.

2. Verfahren nach Anspruch 1, wobei der Datensatz, der für die natürliche Anatomie des Patienten relevant ist, aus der Bildgebung der oralen Anatomie eines Patienten abgeleitet wird.

3. Verfahren nach Anspruch 1, wobei der für die natürliche Anatomie des Patienten relevante Datensatz aus dem Scannen eines Abdrucks der oralen Anatomie des Patienten abgeleitet wird.

4. Verfahren nach Anspruch 1, wobei der Datensatz, der für die natürliche Anatomie des Patienten relevant ist, aus einer engsten Übereinstimmung einer Datenbank ausgewählter anatomischer Profile ausgewählt wird.

5. Verfahren nach einem der Ansprüche 1 bis 4, wobei der Basisabschnitt eine Mindestdicke unabhängig von volumetrischen Verringerungen des Zahnabschnitts beibehält, die während des Anpassens des Basisabschnitts erreicht werden.

6. Verfahren nach einem der Ansprüche 1 bis 5, wobei der Basisabschnitt während des Anpassens des Basisabschnitts in den Zahnabschnitt integriert wird.

7. Verfahren nach einem der Ansprüche 1 bis 7, wobei die prothetische Struktur eine Vollbogenprothese umfasst.

8. Verfahren nach einem der Ansprüche 1 bis 7, wobei die für den Patienten angepasste Prothese eine gescannte Prothese ist.

9. Verfahren nach einem der Ansprüche 1 bis 7, wobei die für den Patienten angepasste Prothese eine digitale Prothese ist, die zuvor für den Patienten entworfen wurde.

10. Verfahren nach einem der Ansprüche 1 bis 9, wobei das Anpassen des Basisabschnitts der prothetischen Struktur an die Modifikationen des Zahnabschnitts gleichzeitig die Cameo-Oberfläche und den volumetrischen Effekt des Basisabschnitts anpasst.

11. Verfahren nach einem der Ansprüche 1 bis 10, wobei der Schritt des Anpassens des Basisabschnitts der prothetischen Struktur an die Modifikationen des Zahnabschnitts gleichzeitig das Reservieren von Platz für ein Verstärkungsmaterial einschließt, das wenigstens einen Teil des Basisabschnitts überspannen kann.

## Revendications

1. Procédé de conception d'une structure prothétique comprenant une partie de dent et une partie de base, le procédé comprenant les étapes consistant à :
acquérir un ensemble de données relatives à l'anatomie naturelle d'un patient,
construire la partie de dent prothétique dans un programme de logiciel informatique en utilisant l'ensemble de données, moyennant quoi l'utilisateur sculpte et positionne des dents avec des techniques et des outils utilisés dans le logiciel affiché dans une interface informatique ;
afficher la partie de base de la structure prothétique dans une vue directe ou éclatée sous la partie de dent de la structure prothétique, dans lequel des paramètres pour les dimensions de la partie de base sont préchargés, dans lequel la partie de base a une structure de base comprenant des poches, des éminences radiculaires, de la gencive, des plis, une épaisseur minimale et d'autres repères anatomiques qui caractérisent et imitent les caractéristiques fonctionnelles et esthétiques de l'anatomie naturelle du patient ;
modifier la partie de dent dans une opération de conception dans le logiciel ; **caractérisé par** l'étape consistant à
adapter simultanément la partie de base de la structure prothétique à la modification de la partie de dent, de sorte que les repères anatomiques et les formes soient imités dans les paramètres pour les dimensions de la partie de base en ce sens que les paramètres pour les dimensions de la partie de base sont définis de telle sorte que des parties d'au moins l'une des surfaces suivantes des parties de base sont commandées afin qu'elles ne changent pas : surface en taille-douce, les bords de la partie de base, reflets buccaux, vestibule, de sorte que la partie de base conserve une relation complémentaire avec l'anatomie naturelle du patient.

2. Procédé selon la revendication 1, l'ensemble de données relatives à l'anatomie naturelle du patient provenant d'une imagerie de l'anatomie buccale d'un patient.

3. Procédé selon la revendication 1, l'ensemble de données relatives à l'anatomie naturelle du patient provenant de la numérisation d'une empreinte de l'anatomie buccale du patient.

4. Procédé selon la revendication 1, l'ensemble de données relatives à l'anatomie naturelle du patient étant sélectionné à partir d'une correspondance la plus proche d'une base de données de profils anatomiques sélectionnés.

5. Procédé selon l'une quelconque des revendications 1 à 4, dans lequel la partie de base maintient une épaisseur minimale quelles que soient des réductions volumétriques de la partie de dent accomplies lors de ladite adaptation de la partie de base.

6. Procédé selon l'une quelconque des revendications 1 à 5, dans lequel la partie de base est intégrée à la partie de dent lors de ladite adaptation de la partie de base.

7. Procédé selon l'une quelconque des revendications 1 à 7, la structure prothétique comprenant une prothèse à arcade complète.

8. Procédé selon l'une quelconque des revendications 1 à 7, dans lequel le dispositif prothétique personnalisé pour le patient est une prothèse qui a été scannée.

9. Procédé selon l'une quelconque des revendications 1 à 7, dans lequel le dispositif prothétique personnalisé pour le patient est une prothèse numérique précédemment conçue pour le patient.

10. Procédé selon l'une quelconque des revendications 1 à 9, dans lequel ladite adaptation de la partie de base de la structure prothétique aux modifications apportées à la partie de dent adapte simultanément la surface de camée et l'effet volumétrique de la partie de base.

11. Procédé selon l'une quelconque des revendications 1 à 10, où l'étape d'adaptation de la partie de base de la structure prothétique aux modifications apportées à la partie de dent comprend simultanément la réservation d'un espace pour un matériau de renforcement qui peut s'étendre sur au moins une partie de la partie de base.
